(19) Europäisches Patentamt
European Patent Office
Office européen des brevets

(11) EP 4 693 518 A1

(12) EUROPEAN PATENT APPLICATION

(43) Date of publication:
**11.02.2026 Bulletin 2026/07**

(21) Application number: **25193964.1**

(22) Date of filing: **05.08.2025**

(51) International Patent Classification (IPC):
***H01M 4/62*** *(2006.01)* ***H01M 4/525*** *(2010.01)*
***H01M 10/0525*** *(2010.01)*

(52) Cooperative Patent Classification (CPC):
**H01M 4/62; H01M 4/366; H01M 4/525;**
H01M 2004/028

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **06.08.2024 KR 20240104624**

(71) Applicant: **SAMSUNG SDI CO., LTD.**
**Yongin-si, Gyeonggi-do 17084 (KR)**

(72) Inventors:
- **KIM, Hyunwoo**
  **17084 Gyeonggi-do (KR)**
- **HAN, Seung-hun**
  **17084 Gyeonggi-do (KR)**
- **CHO, Moonju**
  **17084 Gyeonggi-do (KR)**
- **LIM, Seunghyun**
  **17084 Gyeonggi-do (KR)**
- **JEON, Seunghyun**
  **17084 Gyeonggi-do (KR)**
- **CHO, Youngkwang**
  **17084 Gyeonggi-do (KR)**

(74) Representative: **Maiwald GmbH**
**Elisenhof**
**Elisenstraße 3**
**80335 München (DE)**

# (54) ADDITIVE FOR POSITIVE ELECTRODE OF RECHARGEABLE LITHIUM BATTERY, POSITIVE ELECTRODE INCLUDING THE SAME, RECHARGEABLE LITHIUM BATTERY INCLUDING THE SAME

(57) Disclosed is an additive for a positive electrode of a rechargeable lithium battery. A positive electrode active material layer includes a positive electrode active material, a sacrificial positive electrode material, a functional additive, a conductive material, and a binder. The functional additive includes an azole-based compound. An amount of the functional additive is in a range of from about 0.03 parts by weight to about 0.3 parts by weight relative to 100 parts by weight of the positive electrode active material layer.

FIG. 1

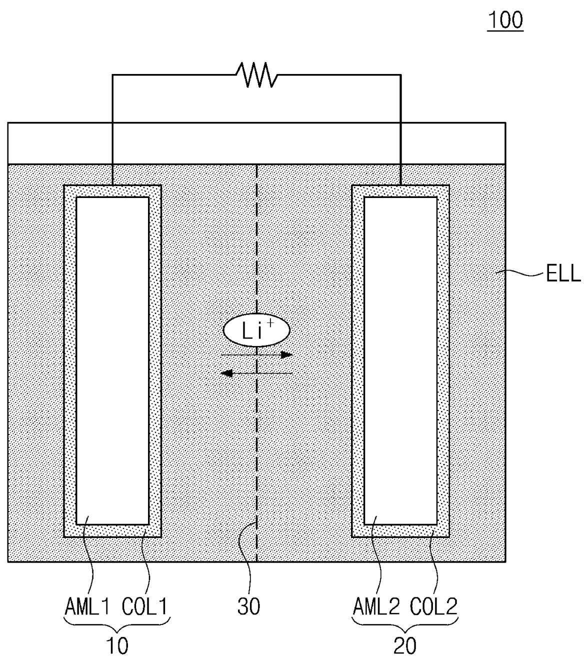


EP 4 693 518 A1

Processed by Luminess, 75001 PARIS (FR)

## Description

BACKGROUND

The present invention relates to an additive for a positive electrode of a rechargeable lithium battery.

With increasing presence of battery-using electronic devices, such as, e.g., mobile phones, laptop computers, electric vehicles, and the like, there is increasing demand for rechargeable batteries with high energy density and high capacity. Therefore, improving performance of rechargeable lithium batteries may be advantageous.

A rechargeable lithium battery typically includes a positive electrode, a negative electrode, and an electrolyte, the positive and negative electrodes include an active material in which intercalation and deintercalation are possible, and the rechargeable lithium battery generates electrical energy caused by oxidation and reduction reactions when lithium ions are intercalated and deintercalated.

SUMMARY

An example embodiment of the present disclosure includes a positive electrode including a functional additive.

An example embodiment of the present disclosure includes a method of fabricating a rechargeable lithium battery in which method a functional additive is added to fabricate the rechargeable lithium battery.

According to an example embodiment of the present disclosure, a positive electrode active material layer may include a positive electrode active material, a sacrificial positive electrode material, a functional additive, a conductive material, and a binder. The functional additive may include an azole-based compound. An amount of the functional additive may be in a range of from about 0.03 parts by weight to about 0.3 parts by weight relative to 100 parts by weight of the positive electrode active material layer.

According to an example embodiment of the present disclosure, a rechargeable lithium battery may include a positive electrode, a negative electrode, and an electrolyte layer between the positive electrode and the negative electrode. The positive electrode may include a positive electrode current collector, and a positive electrode active material layer on the positive electrode current collector. The positive electrode active material layer may include a positive electrode active material, a sacrificial positive electrode material, a functional additive, a conductive material, and a binder. The functional additive may include an azole-based compound. The functional additive, the positive electrode active material, and the sacrificial positive electrode material may be respectively present in a first amount, a second amount, and a third amount with respect to the positive electrode active material layer. A value of Equation 1 may be in a range of from about 0.5 to about 2.

Equation 1:

$$\frac{\text{First amount}}{\text{Second amount} \times 0.0003 + \text{Third amount} \times 0.01}$$

According to an example embodiment of the present disclosure, a method of fabricating a rechargeable lithium battery may include mixing a positive electrode active material, a sacrificial positive electrode material, a conductive material, a binder, and a functional additive to prepare a positive electrode active material slurry, and coating on a current collector the positive electrode active material slurry to form a positive electrode active material layer. An amount of the functional additive may be in a range of from about 0.03 parts by weight to about 0.3 parts by weight relative to 100 parts by weight of the positive electrode active material. An amount of the sacrificial positive electrode material may be in a range of from about 1 part by weight to about 15 parts by weight relative to 100 parts by weight of the positive electrode active material slurry.

BRIEF DESCRIPTION OF DRAWINGS

FIG. 1 illustrates a simplified conceptual diagram showing a rechargeable lithium battery, according to an example embodiment of the present disclosure.

FIGS. 2 to 5 illustrate simplified diagrams showing a rechargeable lithium battery, according to an example embodiment of the present disclosure.

FIG. 6 illustrates a cross-sectional view showing a rechargeable lithium battery, according to an example embodiment

of the present disclosure.

FIG. 7 illustrates an enlarged view showing section M of FIG. 6.

FIG. 8 is a flow chart illustrating a method of fabricating a rechargeable lithium battery, according to an example embodiment.

## DETAILED DESCRIPTION OF EMBODIMENTS

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure and let those skilled in the art fully know the scope of the present disclosure.

In this description, it is understood that, when an element is referred to as being "on" another element, the element can be "directly on" the other element, or intervening elements may be present therebetween. In the drawings, thicknesses of some components may be exaggerated for effectively explaining the technical contents. Like reference numerals refer to like elements throughout the specification.

Unless otherwise noted in this description, the expression of singular form may include the expression of plural form. In addition, unless otherwise specially noted, the phrase "A or B" may indicate "A but not B," "B but not A," and "A and B." The terms "comprises/includes" and/or "comprising/including" included in this disclosure do not exclude the presence or addition of one or more other components.

As included herein, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter ($D_{50}$) where a cumulative volume is about 50 volume % in a particle size distribution. The average particle diameter ($D_{50}$) may be measured by a method known to those skilled in the art, for example, by a particle size analyzer, a transmission electron microscope (TEM) image, or a scanning electron microscope (SEM) image. Alternatively, a dynamic light-scattering measurement device is included to perform a data analysis, the number of particles is counted for each particle size range, and from the counted number of particles, an average particle diameter ($D_{50}$) value may be obtained through a calculation. A laser scattering method may also be utilized to measure the average particle diameter ($D_{50}$). In the laser scattering method, a target particle is distributed in a dispersion solvent, introduced into a laser scattering particle measurement device (e.g., MT3000 commercially available from Microtrac, Inc), irradiated with ultrasonic waves of 28 kHz at a power of 60 W, and an average particle diameter ($D_{50}$) is calculated in the 50% standard of particle diameter distribution in the measurement device.

When the terms "about" or "substantially" are included in this specification in connection with a numerical value, it is intended that the associated numerical value include a tolerance of ±10% around the stated numerical value. When ranges are specified, the range includes all values therebetween such as increments of 0.1%.

FIG. 1 illustrates a simplified conceptual diagram showing a rechargeable lithium battery, according to an example embodiment of the present disclosure. Referring to FIG. 1, a rechargeable lithium battery may include a positive electrode 10, a negative electrode 20, a separator 30, and an electrolyte solution ELL.

The positive electrode 10 and the negative electrode 20 may be spaced apart from each other across the separator 30. The separator 30 may be located between the positive electrode 10 and the negative electrode 20. The positive electrode 10, the negative electrode 20, and the separator 30 may be in contact with the electrolyte solution ELL. The positive electrode 10, the negative electrode 20, and the separator 30 may be impregnated in the electrolyte solution ELL.

The electrolyte solution ELL may be or include a medium by which lithium ions are transferred between the positive electrode 10 and the negative electrode 20. In the electrolyte solution ELL, the lithium ions may move through the separator 30 toward one of the positive electrode 10 and the negative electrode 20.

In a case of a rechargeable battery including a gel polymer electrolyte (or semi-solid electrolyte) and a solid electrolyte, an electrolyte layer may be included. In this case, the electrolyte layer may take over rolls of the separator 30 and the electrolyte solution ELL.

### Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material and further include a binder and/or a conductive material. An amount of the positive electrode active material in the positive electrode active material layer AML1 may be in a range of from about 90 wt% to about 99.5 wt% relative to 100 wt% of the positive electrode active material layer AML1. An amount of

each of, or at least one of, the binder and the conductive material may be in a range of from about 0.5 wt% to about 5 wt% relative to 100 wt% of the positive electrode active material layer AML1. The positive electrode active material layer AML1 may further include a sacrificial positive electrode material and a functional additive. The positive electrode according to some example embodiments of the present disclosure is further discussed in detail below. Aluminum (Al) may be included as the current collector COL1, but the present disclosure is not limited thereto.

Positive Electrode Active Material:

The positive electrode active material in the positive electrode active material layer AML1 may include a compound (e.g., lithiated intercalation compound) that can reversibly intercalate and deintercalate lithium. For example, the positive electrode active material may include at least one kind of composite oxide including lithium and metal that is or includes at least one of cobalt, manganese, nickel, and a combination thereof.

The composite oxide may include a lithium transition metal composite oxide, for example, at least one of lithium-nickel-based oxide, lithium-cobalt-based oxide, lithium-manganese-based oxide, lithium-iron-phosphate-based compounds, cobalt-free nickel-manganese-based oxide, or a combination thereof.

For example, the positive electrode active material may include a compound expressed by one of chemical formulae below. $Li_aA_{1-b}X_bO_{2-c}D_c$ (where $0.90 \leq a \leq 1.8$, $0 \leq b \leq 0.5$, and $0 \leq c \leq 0.05$); $Li_aMn_{2-b}X_bO_{4-c}D_c$ (where $0.90 \leq a \leq 1.8$, $0 \leq b \leq 0.5$, and $0 \leq c \leq 0.05$); $Li_aNi_{1-b-c}Co_bX_cO_{2-\alpha}D_\alpha$ (where $0.90 \leq a \leq 1.8$, $0 \leq b \leq 0.5$, $0 \leq c \leq 0.5$, and $0<\alpha<2$); $Li_aNi_{1-b-c}Mn_bX_cO_{2-\alpha}D_\alpha$ (where $0.90\ a \leq 1.8$, $0 \leq b \leq 0.5$, $0 \leq c \leq 0.5$, and $0<\alpha<2$); $Li_aNi_bCo_cL^1{}_aG_eO_2$ (where $0.90\ a \leq 1.8$, $0 \leq b \leq 0.9$, $0 \leq c \leq 0.5$, $0 \leq d \leq 0.5$, and $0 \leq e \leq 0.1$); $Li_aNiG_bO_2$ (where $0.90\ a \leq 1.8$ and $0.001 \leq b \leq 0.1$); $Li_aCoG_bO_2$ (where $0.90 \leq a \leq 1.8$ and $0.001 \leq b \leq 0.1$); $Li_aMn_{1-b}G_bO_2$ (where $0.90 \leq a \leq 1.8$ and $0.001 \leq b \leq 0.1$); $Li_aMn_2G_bO_4$ (where $0.90 \leq a \leq 1.8$ and $0.001 \leq b \leq 0.1$); $Li_aMn_{1-g}G_gPO_4$ (where $0.90 \leq a \leq 1.8$ and $0 \leq g \leq 0.5$); $Li_{(3-f)}Fe_2(PO_4)_3$ (where $0 \leq f \leq 2$); $Li_aFePO_4$ (where $0.90\ a \leq 1.8$).

In the chemical formulae above, A is or includes at least one of Ni, Co, Mn, or a combination thereof, X is or includes at least one of Al, Ni, Co, Mn, Cr, Fe, Mg, Sr, V, a rare-earth element, or a combination thereof, D is or includes at least one of O, F, S, P, or a combination thereof, G is or includes at least one of Al, Cr, Mn, Fe, Mg, La, Ce, Sr, V, or a combination thereof, and $L^1$ is or includes at least one of Mn, Al, or a combination thereof.

For example, the positive electrode active material may be or include a high-nickel-based positive electrode active material having a nickel amount that is equal to or greater than about 80 mol%, equal to or greater than about 85 mol%, equal to or greater than about 90 mol%, equal to or greater than about 91 mol%, or equal to or greater than about 94 mol% and equal to or less than about 99 mol% relative to 100 mol% of metal devoid of lithium in the lithium transition metal composite oxide. The high-nickel-based positive electrode active material may achieve high capacity, and thus may be applied to a high-capacity and high-density rechargeable lithium battery.

The positive electrode active material may be present in an amount in a range of from about 85 parts by weight to about 98 parts by weight relative to 100 parts by weight of the positive electrode active material layer AML1. The positive electrode active material may include residual lithium on a surface of the positive electrode active material. The residual lithium that is on the surface of the positive electrode active material may be or include a lithium (Li) particle or a compound including lithium (Li). For example, the compound including lithium (Li) may be or include at least one of LiOH and $Li_2CO_3$, but the present disclosure is not limited thereto. An amount of the residual lithium on the surface of the positive electrode active material may be in a range of from about 1 part by weight to about 4 parts by weight relative to 100 parts by weight of the sacrificial positive electrode material.

Positive Electrode Binder:

The binder may be configured to improve attachment of positive electrode active material particles to each other, and to improve attachment of the positive electrode active material to the current collector COL1. The binder may include, for example, at least one of polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, or nylon, but the present disclosure is not limited thereto.

Positive Electrode Conductive Material:

The conductive material may be included to provide an electrode with conductivity, and any suitable conductive material that does not cause a chemical change in a battery may be included as the conductive material. The conductive material may include, for example, a carbon-based material such as at least one of natural graphite, artificial graphite, carbon black, acetylene black, Ketjen black, carbon fiber, carbon nano-fiber, and carbon nano-tube; a metal powder or

metal fiber including one or more of copper, nickel, aluminum, and silver; a conductive polymer such as a polyphenylene derivative; or a mixture thereof.

Negative Electrode 20

The negative electrode 20 for a rechargeable lithium battery may include a current collector COL2 and a negative electrode active material layer AML2 located on the current collector COL2. The negative electrode active material layer AML2 may include a negative electrode active material, and may further include a binder and/or a conductive material.

For example, the negative electrode active material layer AML2 may include a negative electrode active material in a range of from about 90 wt% to about 99 wt%, a binder in a range of from about 0.5 wt% to about 5 wt%, and a conductive material in a range of from about 0 wt% to about 5 wt%.

Negative Electrode Binder:

The binder may be configured to improve attachment of negative electrode active material particles to each other, and to improve attachment of the negative electrode active material to the current collector COL2. The binder may include at least one of a non-aqueous binder, an aqueous binder, a dry binder, or a combination thereof.

The non-aqueous binder may include at least one of polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, or a combination thereof.

The aqueous binder may include at least one of styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, or a combination thereof.

When an aqueous binder is included as the negative electrode binder, a cellulose-based compound capable of providing viscosity may further be included. The cellulose-based compound may include one or more of carboxymethyl cellulose, hydroxypropylmethyl cellulose, methyl cellulose, and alkali metal salts thereof. The alkali metal may include at least one of Na, K, or Li.

The dry binder may include a fibrillizable polymer material, for example, at least one of polytetrafluoroethylene, polyvinylidene fluoride, polyvinylidene fluoride-hexafluoropropylene copolymer, polyethylene oxide, or a combination thereof.

Negative Electrode Conductive Material:

The conductive material may be included to provide an electrode with conductivity, and any suitable conductive material that does not cause a chemical change in a battery may be included as the conductive material to constitute the battery. For example, the conductive material may include a carbon-based material such as at least one of natural graphite, artificial graphite, carbon black, acetylene black, Ketjen black, carbon fiber, carbon nano-fiber, and carbon nano-tube; a metal powder or metal fiber including one or more of copper, nickel, aluminum, and silver; a conductive polymer such as a polyphenylene derivative; or a mixture thereof.

Negative Electrode Current Collector:

The current collector COL2 may include at least one of a copper foil, a nickel foil, a stainless-steel foil, a titanium foil, a nickel foam, a copper foam, a polymer substrate coated with a conductive metal, or a combination thereof.

Negative Electrode Active Material:

The negative electrode active material in the negative electrode active material layer AML2 may include at least one of a material that can reversibly intercalate and deintercalate lithium ions, lithium metal, a lithium metal alloy, a material that can dope and de-dope lithium, or transition metal oxide.

The material that can reversibly intercalate and deintercalate lithium ions may include a carbon-based negative electrode active material, for example, crystalline carbon, amorphous carbon, or a combination thereof. For example, the crystalline carbon may include graphite such as non-shaped, sheet-shaped, flake-shaped, sphere-shaped, or fiber-shaped natural or artificial graphite, and the amorphous carbon may include at least one of soft carbon, hard carbon, mesophase pitch carbon, or calcined coke.

The lithium metal alloy may include an alloy of lithium and metal that is or includes at least one of Na, K, Rb, Cs, Fr,

Be, Mg, Ca, Sr, Si, Sb, Pb, In, Zn, Ba, Ra, Ge, Al, and Sn.

The material that can dope and de-dope lithium may include at least one of a Si-based negative electrode active material or a Sn-based negative electrode active material. The Si-based negative electrode active material may include at least one of silicon, silicon-carbon composite, SiOx (where $0<x<2$), Si-Q alloy (where Q is or includes at least one of alkali metal, alkaline earth metal, Group 13 element, Group 14 element (except for Si), Group 15 element, Group 16 element, transition metal, a rare-earth element, or a combination thereof), or a combination thereof. The Sn-based negative electrode active material may include at least one of Sn, $SnO_2$, a Sn-based alloy, a combination thereof.

The silicon-carbon composite may be or include a composite of silicon and amorphous carbon. According to an example embodiment, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) on a surface of the secondary particle. The amorphous carbon may also be located between the primary silicon particles, and for example, the primary silicon particles may be coated with the amorphous carbon. The secondary particles may be dispersed in an amorphous carbon matrix.

The silicon-carbon composite may further include crystalline carbon. For example, the silicon-carbon composite may include a core including crystalline carbon and silicon particles, and may also include an amorphous carbon coating layer on a surface of the core.

The Si-based negative electrode active material or the Sn-based negative electrode active material may be included in combination with a carbon-based negative electrode active material.

Separator 30

Based on the type of the rechargeable lithium battery, the separator 30 may be located between the positive electrode 10 and the negative electrode 20. The separator 30 may include one or more of polyethylene, polypropylene, and polyvinylidene fluoride, and may have a multi-layered separator thereof such as a polyethylene/polypropylene bi-layered separator, a polyethylene/polypropylene/polyethylene tri-layered separator, and a polypropylene/polyethylene/polypropylene tri-layered separator.

The separator 30 may include a porous substrate, and a coating layer on one surface, or on opposite surfaces, of the porous substrate, the coating layer including an organic material, an inorganic material, or a combination thereof.

The porous substrate may be or include a polymer layer including at least one of polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, Teflon, and polytetrafluoroethylene, or may be or include a copolymer or mixture including two or more of the materials mentioned above.

The organic material may include a polyvinylidenefluoride-based copolymer or a (meth)acrylic copolymer.

The inorganic material may include an inorganic particle such as or including at least one of $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, or a combination thereof, but the present disclosure is not limited thereto.

The organic material and the inorganic material may be mixed in one coating layer, or may be present as a stack of a coating layer including the organic material and a coating layer including an inorganic material.

Electrolyte Solution ELL

The electrolyte solution ELL for a rechargeable lithium battery may include a non-aqueous organic solvent and a lithium salt.

The non-aqueous organic solvent may be configured as a medium for transmitting ions that participate in an electrochemical reaction of the battery.

The non-aqueous organic solvent may include at least one of a carbonate-based solvent, an ester-based solvent, an ether-based solvent, a ketone-based solvent, an alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, 2.5-dimethyltetrahydrofuran, or tetrahydrofuran. The ketone-based solvent may include cyclohexanone. The alcohol-based solvent may include at least one of ethyl alcohol or isopropyl alcohol. The aprotic solvent

may include at least one of nitriles such as R-CN (where R is a hydrocarbon group having a C2 to C20 linear, branched, or cyclic structure and may include a double bond, an aromatic ring, or an ether group); amides such as dimethylformamide; dioxolanes such as 1,3-dioxolane or 1.4-dioxolane; or sulfolanes.

The non-aqueous organic solvent may be included alone, or in a mixture of two or more substances.

In addition, when a carbonate-based solvent is included, a cyclic carbonate and a chain carbonate may be mixed and included, and the cyclic carbonate and the chain carbonate may be mixed in a volume ratio in a range of from about 1:1 to about 1:9.

The lithium salt may be or include a material that dissolves in the non-aqueous organic solvent to be configured as a supply source of lithium ions in a battery, and that plays a role in enabling a basic operation of a rechargeable lithium battery and in promoting the movement of lithium ions between positive and negative electrodes. The lithium salt may include, for example, at least one of $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and lithium bis(oxalato)borate (LiBOB).

Rechargeable Lithium Battery

Based on the shape of the rechargeable lithium battery, the rechargeable lithium battery may be classified into cylindrical, prismatic, pouch, and coin types. FIGS. 2 to 5 are simplified diagrams showing a rechargeable lithium battery according to an embodiment, with FIG. 2 illustrating a cylindrical battery, FIG. 3 illustrating a prismatic battery, and FIGS. 4 and 5 illustrating pouch-type batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte solution. The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70 illustrated in FIG. 5, or a positive electrode tab 71 and a negative electrode tab 72 illustrated in FIG. 4, and the electrode tabs 70/71/72 forming as an electrical path for externally inducing a current generated in the electrode assembly 40 to the outside of the battery 100.

The rechargeable lithium battery according to an example embodiment of the present disclosure may be applicable to, e.g., automotive vehicles, mobile phones, and/or any other electrical devices, but the present disclosure is not limited thereto.

The following description focuses on a rechargeable lithium battery, and a method of fabricating the rechargeable lithium battery, according to an example embodiment of the present disclosure.

A rechargeable lithium battery according to an example embodiment of the present disclosure may include a high-nickel-based positive electrode active material. For example, the positive electrode active material according to an example embodiment may include a compound represented by Chemical Formula 1 below.

Chemical Formula 1: $Li_aNi_xCo_yMn_zX_cO_{2-b}$

In Chemical Formula 1, $0.8 \leq a \leq 1.2$, $0.8 \leq x \leq 1.0$, $0 \leq y \leq 0.1$, $0 \leq z \leq 0.1$ $0 \leq c \leq 0.1$, $0 \leq b \leq 0.05$, and $x+y+z+c=1$, and X may be or include at least one of Al, Ti, Mg, Zr, Mo, and Nb.

The high-nickel-based positive electrode active material may be included to increase a battery capacity.

With reference to FIGS. 6 and 7, the following describes in detail a positive electrode active material layer of the present disclosure. A positive electrode active material layer may include a sacrificial positive electrode material, a functional additive, and residual lithium.

Sacrificial Positive Electrode Material

A positive electrode active material layer according to an example embodiment of the present disclosure may include a sacrificial positive electrode material. The sacrificial positive electrode material may improve stability and performance of the rechargeable lithium battery.

For example, the sacrificial positive electrode material may supplement lithium to a positive electrode of the rechargeable lithium battery. The sacrificial positive electrode material may include a poly-lithium-based material. For example, the sacrificial positive electrode material may include poly-lithium metal oxide. An amount of lithium ions included in the sacrificial positive electrode material may be equal to or greater than about 2 moles relative to 1 mole of the sacrificial

positive electrode material. For example, the sacrificial positive electrode material may include a compound represented by Chemical Formula 2 below.

Chemical Formula 2: $Li_aXO_b$

In Chemical Formula 2, $2 \leq a \leq 10$ and $2 \leq b \leq 5$. In Chemical Formula 2, X may be or include at least one of Be, Sr, Ba, Sc, Y, Lu, Zr, Cr, Mo, W, Ru, Os, Ir, Pd, Pt, Cu, Ag, Au, Cd, Co, Ni, Mn, Fe, Al, Mg, Zn, Ti, and a combination thereof. For example, the sacrificial positive electrode material may be or include at least one of $Li_5FeO_4$, $Li_2NiO_2$, and $Li_6CoO_4$, but the present disclosure is not limited thereto. The sacrificial positive electrode material may be present in an amount in a range of from about 1 part by weight to about 15 parts by weight, about 1 part by weight to about 5 parts by weight, or about 1 part by weight to about 3 parts by weight relative to 100 parts by weight of the positive electrode active material layer.

The sacrificial positive electrode material may include residual lithium on a surface of the sacrificial positive electrode material. The residual lithium provided on the surface of the sacrificial positive electrode material may be or include a lithium (Li) particle, or a compound including lithium (Li). An amount of the residual lithium on the surface of the sacrificial positive electrode material may be in a range of from about 2 parts by weight to about 10 parts by weight relative to 100 parts by weight of the sacrificial positive electrode material.

A quantity of the residual lithium on the surface of the positive electrode active material may be less than the quantity of the residual lithium on the surface of the sacrificial positive electrode material. As a quantity of the residual lithium on the sacrificial positive electrode material is greater than the quantity of the residual lithium on the positive electrode active material, and as a quantity of lithium eluded from an interior of the sacrificial positive electrode material is greater than the quantity of lithium eluded from an interior of the positive electrode active material, a quantity of the residual lithium released from the sacrificial positive electrode material may be greater than the quantity of the residual lithium released from the positive electrode active material. A quantity of the residual lithium in the positive electrode active material layer may be equal to a sum of the quantity of the residual lithium on the surface of the positive electrode active material and the quantity of the residual lithium on the sacrificial positive electrode material. The residual lithium in the positive electrode active material layer may be present in an amount in a range of from about 0.01 parts by weight to about 1 part by weight relative to 100 parts by weight of the positive electrode active material layer.

When the residual lithium is present in an amount that is greater than about 1 part by weight relative to 100 parts by weight of the positive electrode active material layer, gelation of positive electrode active material slurry, or degeneration of binder may occur to cause degradation in the positive electrode active material.

Functional Additive

A positive electrode active material layer according to an example embodiment of the present disclosure may include a functional additive. The functional additive may improve stability and performance of the rechargeable lithium battery.

The functional additive may reduce a surface deterioration caused by side reactions in the positive electrode active material. For example, the functional additive may solve complex problems in batteries, such as, e.g., slurry gelation, resistance increase, cycle-life reduction, gas generation increase, and the like. Consequently, the rechargeable lithium battery may improve in processability and performance.

For the layered positive electrode active material discussed above, the recent trend in the industry is to reduce an amount of cobalt (Co), which is typically expensive, and increase an amount of nickel (Ni), which exhibits high capacity.

However, an increase in amount of nickel (Ni) in the positive electrode active material may cause a reduction of nickel cations on the surface of the positive electrode active material and/or reactions with atmosphere and/or moisture, which may result in an increase in the frequency of side reactions. Therefore, elution of internal lithium and lithium compound formation may cause issues of degradation in reversible capacity and reduction in processability. In addition, in the event of the layered active material with high amounts of nickel, performance degradation may begin at a surface of the active material. Thus, there may be cases where coating and structural stabilization processes are introduced to protect the surface of the positive electrode active material, these approaches may lead to increase in cost and reduction in energy density.

The functional additive may include an azole-based compound. The azole-based compound may refer to a compound including at least one functional group such as or including an imidazole group, a triazole group, a pyrazole group, and a thiazole group.

The compound including an imidazole group may indicate an imidazole derivative. Alternatively, the compound including an imidazole group may be or include a compound including two or more imidazole groups. The compound including a triazole group may indicate a triazole derivative. Alternatively, the compound including a triazole group may be or include a compound including two or more triazole groups. The compound including a pyrazole group may indicate a

pyrazole derivative. Alternatively, the compound including a pyrazole group may be or include a compound including two or more pyrazole groups. The compound including a thiazole group may indicate a thiazole derivative. Alternatively, the compound including a thiazole group may be or include a compound including two or more thiazole groups.

Imidazole may be expressed by a molecular formula $C_3N_2H_4$, or a heterocyclic compound including carbon (C) and nitrogen (N). An imidazole compound may be or include a heterocyclic compound having a non-adjacent nitrogen atom.

Triazole may be expressed by a molecular formula $C_2H_3N_3$, or a heterocyclic compound including carbon (C) and nitrogen (N). A triazole compound may have one or more isomers. For example, the isomers of the triazole compound may be or include 1H-1,2,4-triazole, 1H-1,2,3-triazole, 2H-1,2,3-triazole, and 4H-1,2,4-triazole.

Pyrazole may be expressed by a molecular formula $C_3H_3N_2H$, or a heterocyclic compound including carbon (C) and nitrogen (N). A pyrazole compound may indicate a heterocyclic compound characterized by a five-membered ring including adjacent two nitrogen atoms.

Thiazole may be expressed by a molecular formula $C_3H_3NS$, or a heterocyclic compound including carbon (C), sulfur (S), and nitrogen (N). A thiazole compound may indicate a heterocyclic compound characterized by a five-membered ring including non-adjacent sulfur (S) and nitrogen (N) atoms.

The functional additive according to an example embodiment of the present disclosure may be added to the positive electrode active material layer, and may achieve improved processability, stability, and battery performance. As illustrated in FIG. 7, a coating layer CTL may be provided on a surface of at least one of a positive electrode active material AM1 and a sacrificial positive electrode material. The coating layer CTL may include a functional additive. The addition of the functional additive may form the coating layer CTL on a surface of each of, or at least one of, the positive electrode active material AM1 and the sacrificial positive electrode material. The coating layer CTL may reduce or prevent elution of residual lithium on the surface of each of, or at least one of, the positive electrode active material AM1 and the sacrificial positive electrode material.

The positive electrode active material may be added with a functional additive including an azole-based compound to reduce surface degradation, and to improve cycle-life characteristics. For example, a nitrogen (N) atom in the functional additive may combine with a metal ion of the positive electrode active material, thereby leading to a reduction in surface degradation. It may be possible to reduce or suppress elution of lithium in the positive electrode active material. Even when the positive electrode active material layer is manufactured with a thick-film electrode plate, battery stability and performance may be improved. In an example embodiment, a thickness of the positive electrode active material layer may range from about 10 μm to about 30 μm, from about 5 μm to about 30 μm, from about 10 μm to about 20 μm, from about 10 μm to about 40 μm, from about 20 μm to about 50 μm, from about 40 μm to about 50 μm, or from about 50 μm to about 70 μm.

An amount of the functional additive may range from about 0.03 parts by weight to about 0.3 parts by weight relative to 100 parts by weight of the positive electrode active material. When the amount of the functional additive is less than about 0.03 parts by weight relative to 100 parts by weight of the positive electrode active material, no coating may be performed on the surface of each of the positive electrode active material and the sacrificial positive electrode material. Thus, the residual lithium on the positive electrode active material and the sacrificial positive electrode material may be eluted to react with a binder, thereby leading to a degeneration of the binder. When the amount of the functional additive is greater than about 0.3 parts by weight relative to 100 parts by weight of the positive electrode active material, the functional additive may act as a resist material to increase an electrode plate, thereby leading to degradation in characteristics of the rechargeable lithium battery.

According to an example embodiment of the present disclosure, a value of Equation 1 below may range from about 0.5 to about 2.

Equation 1:

$$\frac{\text{Amount of functional additive}}{\text{Amount of positive electrode active material} \times 0.0003 + \text{Amount of sacrificial positive electrode material} \times 0.01}$$

In Equation 1, the term "amount of functional additive" may be a part by weight of the functional additive relative to 100 parts by weight of the positive electrode active material layer. In Equation 1, the term "amount of positive electrode active material" may be a part by weight of the positive electrode active material relative to 100 parts by weight of the positive electrode active material layer. In Equation 1, the term "amount of sacrificial positive electrode material" may be a part by weight of the sacrificial positive electrode material relative to 100 parts by weight of the positive electrode active material layer.

When the value of Equation 1 is less than about 0.5, the residual lithium eluted from the positive electrode active material, or the sacrificial positive electrode material, may lead to gelation of positive electrode active material slurry or gas generation. When the value of Equation 1 is greater than about 2, the functional additive may cause an increase in electrode plate resistance, which may lead to a reduction in capacity and cycle-life of the rechargeable lithium battery. According to the present disclosure, when the range above is satisfied, it may be possible to exhibit an overall improved effect in terms of stability and capacity of the positive electrode active material.

The following description focuses on an azole-based compound according to an example embodiment of the present disclosure.

An imidazole-based compound according to the present disclosure may include a compound represented by Chemical Formula 3 below.

Chemical Formula 3:

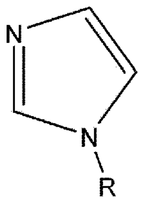

In Chemical Formula 3,

R may be or include at least one of hydrogen, deuterium, a halogen group, a substituted or unsubstituted alkyl group, a substituted or unsubstituted alkenyl group, a substituted or unsubstituted alkynyl group, a substituted or unsubstituted hydrocarbon ring group, a substituted or unsubstituted cyclic alkyl group, a substituted or unsubstituted aryl group, and a substituted or unsubstituted heterocyclic group.

A triazole-based compound according to the present disclosure may include a compound represented by Chemical Formula 4 below.

Chemical Formula 4:

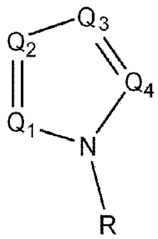

In Chemical Formula 4,

Two of $Q_1$, $Q_2$, $Q_3$, and $Q_4$ may be or include nitrogen, and remaining two of $Q_1$, $Q_2$, $Q_3$, and $Q_4$ may be or include carbon.

R may be or include at least one of hydrogen, deuterium, a halogen group, a substituted or unsubstituted alkyl group, a substituted or unsubstituted alkenyl group, a substituted or unsubstituted alkynyl group, a substituted or unsubstituted hydrocarbon ring group, a substituted or unsubstituted cyclic alkyl group, a substituted or unsubstituted aryl group, and a substituted or unsubstituted heterocyclic group.

A pyrazole-based compound according to the present disclosure may include a compound represented by Chemical Formula 5 below.

Chemical Formula 5:

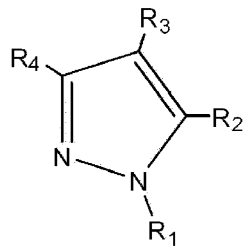

In Chemical Formula 5,
$R_1$ may be or include at least one of hydrogen, deuterium, a halogen group, a substituted or unsubstituted alkyl group, a substituted or unsubstituted alkenyl group, a substituted or unsubstituted alkynyl group, a substituted or unsubstituted hydrocarbon ring group, a substituted or unsubstituted cyclic alkyl group, a substituted or unsubstituted aryl group, and a substituted or unsubstituted heterocyclic group.

$R_2$, $R_3$, and $R_4$ may each be or include at least one of hydrogen, deuterium, nitrogen, oxygen, a halogen group, and a substituted or unsubstituted alkyl group.

A thiazole-based compound according to the present disclosure may include a compound represented by Chemical Formula 6 below.

Chemical Formula 6:

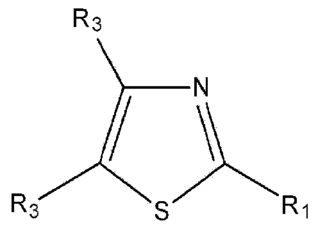

In Chemical Formula 6,
$R_1$, $R_2$, and $R_3$ may each be or include at least one of hydrogen, deuterium, a halogen group, a substituted or unsubstituted alkyl group, a substituted or unsubstituted alkenyl group, a substituted or unsubstituted alkynyl group, a substituted or unsubstituted hydrocarbon ring group, a substituted or unsubstituted cyclic alkyl group, a substituted or unsubstituted aryl group, and a substituted or unsubstituted heterocyclic group.

The above example embodiments are listed by way of example, and the present disclosure is not limited to these example embodiments.

Electrolyte Layer

In an example embodiment, an electrolyte layer may be separately provided between the positive electrode and the negative electrode. The electrolyte layer may include the separator 30 and the electrolyte solution ELL. For example, an entire structure including the separator 30 and the electrolyte solution ELL may be called the electrolyte layer. The electrolyte layer may be in the form of a layer having a certain thickness.

In an example embodiment, the electrolyte layer may be or include a gel polymer electrolyte layer including a gel polymer electrolyte. When the gel polymer electrolyte (or semi-solid electrolyte) is included, a liquid electrolyte and a gel polymer electrolyte that includes a cross-linked polymer may be included in pores of a porous substrate that constitutes the separator 30. In this structure, the liquid electrolyte may be impregnated into a cross-linked polymer network with a cross-link structure, and may thus be hindered or prevented from leaking out.

In an example embodiment, the electrolyte layer may be or include a solid electrolyte layer including a solid electrolyte. The solid electrolyte layer may be configured to perform the roles of the separator 30 and the electrolyte solution ELL.

When the rechargeable lithium battery includes a gel polymer electrolyte (or semi-solid electrolyte) and a solid electrolyte, the electrolyte layer may be configured to perform the rolls of the separator 30 and the electrolyte solution ELL.

Fabrication of Rechargeable Lithium Battery

The following description focuses on a method of fabricating a rechargeable lithium battery, according to an example embodiment.

A method of fabricating a rechargeable lithium battery may include manufacturing a positive electrode, manufacturing a negative electrode, and combining the positive electrode and the negative electrode with each other to fabricate a battery.

For example, the manufacture of the positive electrode may include mixing a positive electrode active material, a sacrificial positive electrode material, a conductive material, a binder, and a functional additive with each other to prepare a positive electrode active material slurry, and coating the positive electrode active material slurry on a current collector to form a positive electrode active material layer. The functional additive may include a compound including an azole-based compound.

Manufacture of Positive Electrode:

A positive electrode active material, a sacrificial positive electrode material, a conductive material, a binder, and a functional additive may be mixed to prepare a positive electrode active material slurry. In the mixing process, any method such as, e.g., wet, or dry methods, which can be used by a person skilled in the art, may be practically utilized, and is not limited to a particular method.

In preparing the positive electrode active material slurry, the previously described materials may be respectively included for the positive electrode active material, the sacrificial positive electrode material, the conductive material, and the binder. For example, the high-nickel-based positive electrode active material may be included as the positive electrode active material.

In preparing the positive electrode active material slurry, the sacrificial positive electrode material and the functional additive may be added. As the functional additive is the same as the functional additive discussed above, a description there of is omitted, and a method of manufacturing the positive electrode is explained in detail.

The functional additive may be added in mixing and preparing the positive electrode active material slurry, and thus it may be possible to address an issue of performance degradation occurring when the positive electrode is manufactured. As a result, the positive electrode may improve in processability and performance. The sacrificial positive electrode material may be added in an amount in a range of from about 1 part by weight to about 15 parts by weight relative to 100 parts by weight of the positive electrode active material slurry. The functional additive may be added in an amount in a range of from about 0.03 parts by weight to about 0.3 parts by weight relative to 100 parts by weight of the positive electrode active material slurry.

In preparing the positive electrode active material slurry, an increase in amount of the added sacrificial positive electrode material may cause an increase in amount of the added functional additive. Thus, the functional additive may form a coating layer on a surface of the sacrificial positive electrode material to reduce or prevent elution of a lithium compound of the sacrificial positive electrode material. The functional additive may also form a coating layer on a surface of the positive electrode active material to reduce or prevent elution of a lithium compound of the positive electrode active material.

It may be possible to effectively address issues such as gas generation and resistance increase caused by side reactions with atmosphere and/or moisture in the mixing step for the positive electrode active material slurry. It may also be possible to effectively address issues such as the formation of lithium compounds, the degeneration of the binder, and the aggregation of the conductive material, which issues may ultimately lead to the gelation of the positive electrode active material slurry.

In addition, the functional additive may be uniformly mixed in the positive electrode active material slurry, and thus a positive electrode active material layer may be formed in which the sacrificial positive electrode material and the functional additive are uniformly distributed. Even when the positive electrode active material layer is manufactured with a thick-film electrode plate, processability and stability may be improved in battery fabrication. In conclusion, a battery may be fabricated which is provided with improved fabrication processability, stability, and capacity. In an example embodiment, a thickness of the positive electrode active material layer may range from about 10 μm to about 30 μm, from about 5 μm to about 30 μm, from about 10 μm to about 20 μm, from about 10 μm to about 40 μm, from about 20 μm to about 50 μm, from about 40 μm to about 50 μm, or from about 50 μm to about 70 μm.

In examples, the prepared positive electrode active material slurry may be coated and dried on a positive electrode current collector, and then pressed to form a positive electrode active material layer.

Manufacture of Negative Electrode:

A negative electrode active material, a binder, and a conductive material may be mixed to prepare a negative

electrode active material slurry. The prepared negative electrode active material slurry may be coated and dried on a negative electrode current collector, and then pressed to manufacture a negative electrode.

Fabrication of Battery

The manufactured positive and negative electrodes may be combined to fabricate a fully assembled rechargeable lithium battery. A separator may be positioned between the positive electrode and the negative electrode, and an electrolyte solution may be introduced to fabricate the battery. Alternatively, an electrolyte layer may be provided between the positive electrode and the negative electrode to fabricate a battery having a stack type.

FIG. 8 is a flow chart illustrating a method of fabricating a rechargeable lithium battery, according to an example embodiment. In examples, the method 800 includes operation 810, which includes mixing a positive electrode active material, a sacrificial positive electrode material, a conductive material, a binder, and a functional additive to prepare a positive electrode active material slurry. For example, an amount of the functional additive is in a range of from about 0.03 parts by weight to about 0.3 parts by weight relative to 100 parts by weight of the positive electrode active material. In another example, the functional additive includes an azole-based compound, and the azole-based compound includes a functional group including at least one of an imidazole group, a triazole group, a pyrazole group, and a thiazole group. In another example, an amount of the sacrificial positive electrode material is in a range of from about 1 part by weight to about 15 parts by weight relative to 100 parts by weight of the positive electrode active material slurry. For example, the sacrificial positive electrode material includes a compound represented by Chemical Formula 1: $Li_aXO_b$, and in Chemical Formula 1, $2 \le a \le 10$ and $2 \le b \le 5$, and X includes at least one of Ni, Fe, and Co. In yet another example, an amount of the positive electrode active material is in a range of from about 85 parts by weight to about 98 parts by weight relative to 100 parts by weight of the positive electrode active material slurry. Operation 820 includes coating on a current collector the positive electrode active material slurry to form a positive electrode active material layer. For example, forming the positive electrode active material slurry includes forming a coating layer on a surface of at least one of the positive electrode active material and the sacrificial positive electrode material, wherein the coating layer includes the functional additive.

The present disclosure may be applicable to any battery that includes a positive electrode active material layer, such as, e.g., a typical lithium ion battery, a solid-state battery, or a semi-solid battery. In addition, the present disclosure is not limited to any particular shape, and may be fabricated in commonly included shape such as prismatic, pouch, and cylindrical shapes.

The following describes detailed example embodiments for implementing the present disclosure. The present disclosure includes not only the above example embodiments but also embodiments that can be readily modified or simply redesigned. Additionally, the present disclosure includes technologies that can be readily modified and implemented using the described example embodiments. Therefore, the scope of the present disclosure should not be limited to the aforementioned example embodiments, but should be defined by the following claims as well as their equivalents.

Embodiment 1: Preparation of Positive Electrode Slurry

95.4 wt% of $LiNi_{0.94}Co_{0.04}Al_{0.02}O_2$ as a positive electrode active material, 1.2 wt% of polyvinylidene fluoride as a binder, and 0.35 wt% of carbon nano-tube as a conductive material were mixed in an N-methylpyrrolidone solvent to prepare a positive electrode active material slurry. The positive electrode active material slurry was added with 3 wt% of $Li_2NiO_2$ as a sacrificial positive electrode material and 0.05 wt% of a functional additive including a compound including a pyrazole group.

Embodiment 2: Preparation of Positive Electrode Slurry

The positive electrode active material slurry was added with 0.05 wt% of a functional additive including a compound including a triazole group. Except for this difference, a positive electrode slurry was prepared in the same method as in Embodiment 1.

Embodiment 3: Preparation of Positive Electrode Slurry

The positive electrode active material slurry was added with 0.05 wt% of a functional additive including a compound including an imidazole group. Except for this difference, a positive electrode slurry was prepared in the same method as in Embodiment 1.

Embodiment 4: Preparation of Positive Electrode Slurry

The positive electrode active material slurry was added with 0.05 wt% of a functional additive including a

compound including a thiazole group. Except for this difference, a positive electrode slurry was prepared in the same method as in Embodiment 1.

Embodiment 5: Preparation of Positive Electrode Slurry

The positive electrode active material slurry was added with 3 wt% of $Li_5FeO_4$ as a sacrificial positive electrode material and 0.05 wt% of a functional additive including a compound including a triazole group. Except for this difference, a positive electrode slurry was prepared in the same method as in Embodiment 1.

Comparative 1: Preparation of Positive Electrode Slurry

The positive electrode active material slurry was added with 0.1 wt% of a functional additive including an oxalic acid without a sacrificial positive electrode material. Except for this difference, a positive electrode slurry was prepared in the same method as in Embodiment 1.

Comparative 2: Preparation of Positive Electrode Slurry

The positive electrode active material slurry was added with 0.1 wt% of a functional additive including an oxalic acid. Except for this difference, a positive electrode slurry was prepared in the same method as that in Embodiment 1.

Comparative 3: Preparation of Positive Electrode Slurry

The positive electrode active material slurry was added with 3 wt% of $Li_5FeO_4$ as a sacrificial positive electrode material and 0.1 wt% of a functional additive including an oxalic acid. Except for this difference, a positive electrode slurry was prepared in the same method as in Embodiment 1.

Comparative 4: Preparation of Positive Electrode Slurry

The positive electrode active material slurry was added with 80.3 wt% of $LiNi_{0.94}Co_{0.04}Al_{0.02}O_2$ as a positive electrode active material, 18 wt% of $Li_2NiO_2$ as a sacrificial positive electrode material, and 0.15 wt% of a functional additive including a compound including a triazole group. Except for this difference, a positive electrode slurry was prepared in the same method as in Embodiment 1.

Comparative 5: Preparation of Positive Electrode Slurry

The positive electrode active material slurry was added with 0.01 wt% of a functional additive including a compound including a triazole group. Except for this difference, a positive electrode slurry was prepared in the same method as in Embodiment 1.

Comparative 6: Preparation of Positive Electrode Slurry

The positive electrode active material slurry was added with 0.15 wt% of a functional additive including a compound including a triazole group. Except for this difference, a positive electrode slurry was prepared in the same method as in Embodiment 1.

Table 1 below lists the fabricated embodiments and comparative examples of the present disclosure. An amount of each material listed in Table 1 is expressed by a part of weight relative to 100 parts by weight of the positive electrode active material slurry.

Table 1:

| | Positive electrode active material part by weight: | Sacrificial positive electrode material part by weight: | | Conductive material part by weight: | Binder part by weight: | Functional additive | |
|---|---|---|---|---|---|---|---|
| Embodiment 1 | 95.4 | $Li_2NiO_2$ | 3 | 0.35 | 1.2 | Pyrazole | 0.05 parts by weight |
| Embodiment 2 | 95.4 | $Li_2NiO_2$ | 3 | | | Triazole | 0.05 parts by weight |
| Embodiment 3 | 95.4 | $Li_2NiO_2$ | 3 | | | Imidazole | 0.05 parts by weight |
| Embodiment 4 | 95.4 | $Li_2NiO_2$ | 3 | | | Thiazole | 0.05 parts by weight |
| Embodiment 5 | 95.4 | $Li_5FeO_4$ | 3 | | | Triazole | 0.05 parts by weight |
| Comparative 1 | 98.35 | - | 0 | | | Oxalic acid | 0.1 parts by weight |
| Comparative 2 | 95.35 | $Li_2NiO_2$ | 3 | | | Oxalic acid | 0.1 parts by weight |
| Comparative 3 | 95.35 | $Li_5FeO_4$ | 3 | | | Oxalic acid | 0.1 parts by weight |
| Comparative 4 | 80.3 | $Li_2NiO_2$ | 18 | | | Triazole | 0.15 parts by weight |
| Comparative 5 | 95.44 | $Li_2NiO_2$ | 3 | | | Triazole | 0.01 parts by weight |
| Comparative 6 | 95.3 | $Li_2NiO_2$ | 3 | | | Triazole | 0.15 parts by weight |

Evaluation 1: Gelation of Slurry Left under Agitation

The functional additive was added to prepare a slurry, and the slurry was left to observe whether gelation of the

slurry occurred or not. The result is listed in Table 2 below.

Table 2:

| | Gelation of slurry | Time to gelation | Degradation in cell characteristics |
|---|---|---|---|
| Embodiment 1 | X | - | X |
| Embodiment 2 | X | - | X |
| Embodiment 3 | X | - | X |
| Embodiment 4 | X | - | X |
| Embodiment 5 | X | - | O |
| Comparative 1 | O | 5 days | O |
| Comparative 2 | O | 2 days | O |
| Comparative 3 | O | 2 days | O |
| Comparative 4 | O | 4 days | O |
| Comparative 5 | X | 3 days | O |
| Comparative 6 | X | - | O |

The positive electrode active material slurries according to Embodiments of the present disclosure were not gelled even after time had passed. In contrast, the positive electrode active material slurries according to Comparatives 1 to 5 were gelled within two to four days.

Referring to Comparatives 1 to 3, it may be found that the slurry including no functional additive including an azole-based compound was promptly gelled. Referring to Comparative 4, it may be found that, when the sacrificial positive electrode material was added in an amount greater than about 15 parts by weight, the slurry gelation occurred to reduce cell efficiency, and thus cell characteristics were degraded. Referring to Comparative 5, it may be found that, when the value of Equation 1 was less than about 0.5, the slurry gelation occurred and particles were aggregated to increase a cell resistance, and thus cell characteristics were degraded. Referring to Comparative 6, it may be found that, when a value of Equation 1 is greater than about 2, the functional additive caused an increase in cell resistance, and thus cell performance was reduced.

It may therefore be ascertained that, in order to reduce or prevent the slurry gelation and to improve the cell performance, an amount of the functional additive was required to be adjusted to allow a value of Equation 1 to be equal to or greater than about 0.5 and less than about 2.

Evaluation 2: Cycle-Life

Cycle-life characteristics were evaluated after fabricating coin cells including the positive electrodes manufactured with the positive electrode active material slurries of Embodiments and Comparatives. The results are listed in Table 3 below.

Table 3:

| | Cycle-life capacity retention rate at 55°C (%, at 100 cycle) |
|---|---|
| Embodiment 1 | 93.0 |
| Embodiment 2 | 92.8 |
| Embodiment 3 | 92.3 |
| Embodiment 4 | 91.2 |
| Embodiment 5 | 91.7 |
| Comparative 1 | 85.0 |
| Comparative 2 | 87.2 |
| Comparative 3 | 88.5 |
| Comparative 4 | 81.4 |

(continued)

| | Cycle-life capacity retention rate at 55°C (%, at 100 cycle) |
|---|---|
| Comparative 5 | 85.9 |
| Comparative 6 | 82.8 |

Referring to Comparative 6, it may be found that no gelation of the positive electrode active material slurry occurred, but cycle-life characteristics were degraded. It may be found that, compared to the batteries according to Comparatives, the batteries according to Embodiments were desired or improved in cycle-life characteristics.

In conclusion, it may be ascertained that the functional additive was included to protect a surface of the positive electrode active material to thereby improve stability.

A positive electrode according to an example embodiment may exhibit an improved effect of protecting a surface of a positive electrode active material, therefore improving cycle-life and output characteristics of rechargeable batteries.

A fabrication method according to an example embodiment may address issues of stability of rechargeable batteries.

## Claims

**1.** A positive electrode active material layer, comprising:

a positive electrode active material;
a sacrificial positive electrode material;
a functional additive;
a conductive material; and
a binder,
wherein the functional additive includes an azole-based compound, and
wherein an amount of the functional additive is in a range of from about 0.03 parts by weight to about 0.3 parts by weight relative to 100 parts by weight of the positive electrode active material layer.

**2.** The positive electrode active material layer of claim 1, wherein an amount of the sacrificial positive electrode material is in a range of from about 1 part by weight to about 15 parts by weight relative to 100 parts by weight of the positive electrode active material layer.

**3.** The positive electrode active material layer of claim 1 or 2, wherein the azole-based compound comprises a functional group comprising at least one of an imidazole group, a triazole group, a pyrazole group, and a thiazole group.

**4.** The positive electrode active material layer of any one of claims 1 to 3, wherein an amount of the positive electrode active material is in a range of from about 85 parts by weight to about 98 parts by weight relative to 100 parts by weight of the positive electrode active material layer.

**5.** The positive electrode active material layer of any one of claims 1 to 4, further comprising:

residual lithium on a surface of at least one of the positive electrode active material and the sacrificial positive electrode material,
wherein an amount of the residual lithium is in a range of from about 0.01 parts by weight to about 4 parts by weight relative to 100 parts by weight of the positive electrode active material layer.

**6.** The positive electrode active material layer of claim 5, wherein a quantity of the residual lithium on the surface of the positive electrode active material is less than a quantity of the residual lithium on the surface of the sacrificial positive electrode material.

**7.** The positive electrode active material layer of claim 5 or 6, wherein:

an amount of the residual lithium on the surface of the positive electrode active material is in a range of from about 1 part by weight to about 4 parts by weight relative to 100 parts by weight of the positive electrode active material, and

an amount of the residual lithium on the surface of the sacrificial positive electrode material is in a range of from about 2 parts by weight to about 10 parts by weight relative to 100 parts by weight of the sacrificial positive electrode material.

**8.** The positive electrode active material layer of any one of claims 1 to 7, wherein the sacrificial positive electrode material comprises a compound represented by Chemical Formula 1,

Chemical Formula 1: $Li_aXO_b$,

in Chemical Formula 1,

$2 \leq a \leq 10$ and $2 \leq b \leq 5$, and
X comprises at least one of Ni, Fe, and Co.

**9.** The positive electrode active material layer of any one of claims 1 to 8, wherein:

the functional additive is present in a first amount with respect to the positive electrode active material layer,
the positive electrode active material is present in a second amount with respect to the positive electrode active material layer, and
the sacrificial positive electrode material is present in a third amount with respect to the positive electrode active material layer,
wherein a value of Equation 1 is in a range of from about 0.5 to about 2,

Equation 1:

$$\frac{\text{First amount}}{\text{Second amount} \times 0.0003 + \text{Third amount} \times 0.01}.$$

**10.** A rechargeable lithium battery, comprising:

a positive electrode;
a negative electrode; and
an electrolyte layer between the positive electrode and the negative electrode,
wherein the positive electrode includes:

a positive electrode current collector; and
a positive electrode active material layer on the positive electrode current collector,

wherein the positive electrode active material layer includes:

a positive electrode active material;
a sacrificial positive electrode material;
a functional additive;
a conductive material; and
a binder,

wherein the functional additive includes an azole-based compound,
wherein the functional additive, the positive electrode active material, and the sacrificial positive electrode material are respectively present in a first amount, a second amount, and a third amount with respect to the positive electrode active material layer, and
wherein a value of Equation 1 is in a range of from about 0.5 to about 2,

Equation 1:

$$\frac{\text{First amount}}{\text{Second amount} \times 0.0003 + \text{Third amount} \times 0.01}.$$

**11.** The rechargeable lithium battery of claim 10, wherein the azole-based compound comprises a functional group comprising at least one of an imidazole group, a triazole group, a pyrazole group, and a thiazole group.

**12.** The rechargeable lithium battery of claim 10 or 11, wherein the sacrificial positive electrode material comprises a compound represented by Chemical Formula 1,

Chemical Formula 1: $Li_aXO_b$,

in Chemical Formula 1,

$2 \leq a \leq 10$ and $2 \leq b \leq 5$, and
X comprises at least one of Ni, Fe, and Co.

**13.** The rechargeable lithium battery of any one of claims 10 to 12, further comprising:

residual lithium on a surface of at least one of the positive electrode active material and the sacrificial positive electrode material,
wherein an amount of the residual lithium is in a range of from about 0.01 parts by weight to about 1 part by weight relative to 100 parts by weight of the positive electrode active material layer.

**14.** The rechargeable lithium battery of claim 13, wherein:

an amount of the residual lithium on the surface of the positive electrode active material is in a range of from about 1 part by weight to about 4 parts by weight relative to 100 parts by weight of the positive electrode active material, and
an amount of the residual lithium on the surface of the sacrificial positive electrode material is in a range of from about 2 parts by weight to about 10 parts by weight relative to 100 parts by weight of the sacrificial positive electrode material.

**15.** The rechargeable lithium battery of any one of claims 10 to 14, further comprising:

a coating layer on a surface of at least one of the positive electrode active material and the sacrificial positive electrode material,
wherein the coating layer includes the functional additive.

FIG. 1

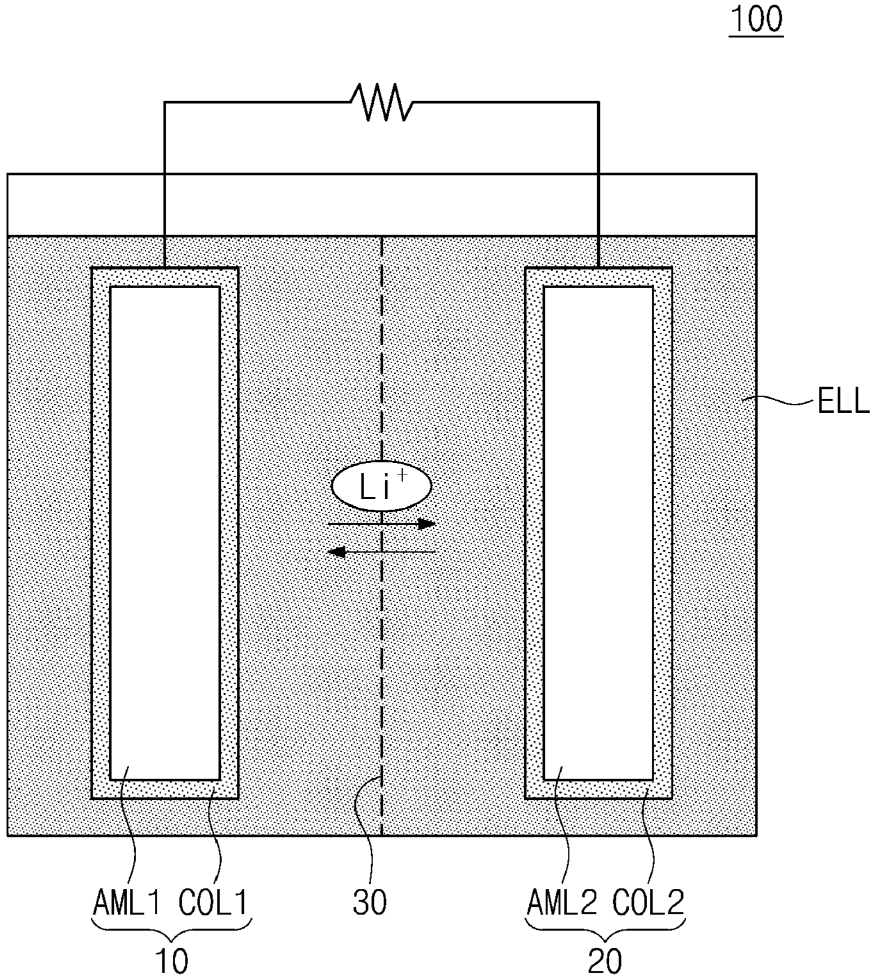

FIG. 2

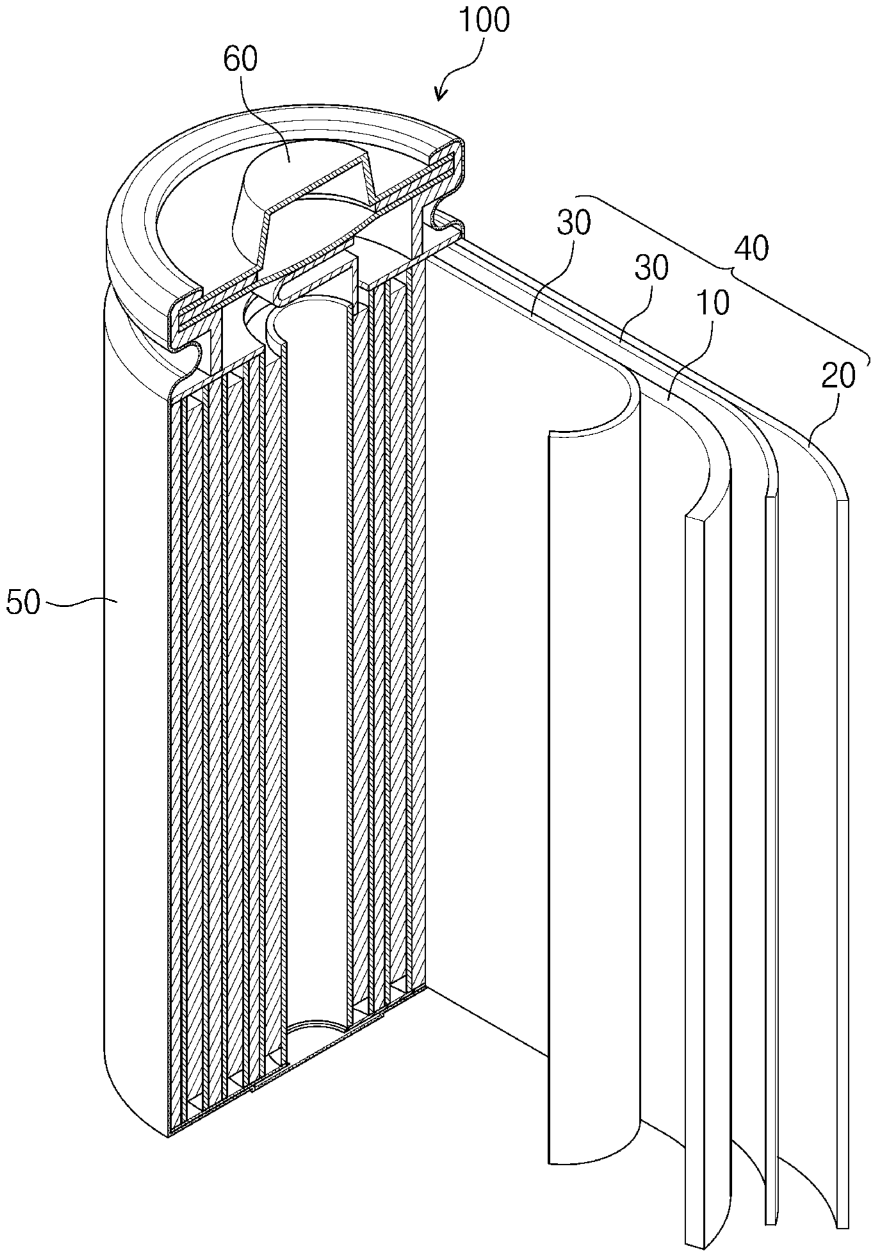

FIG. 3

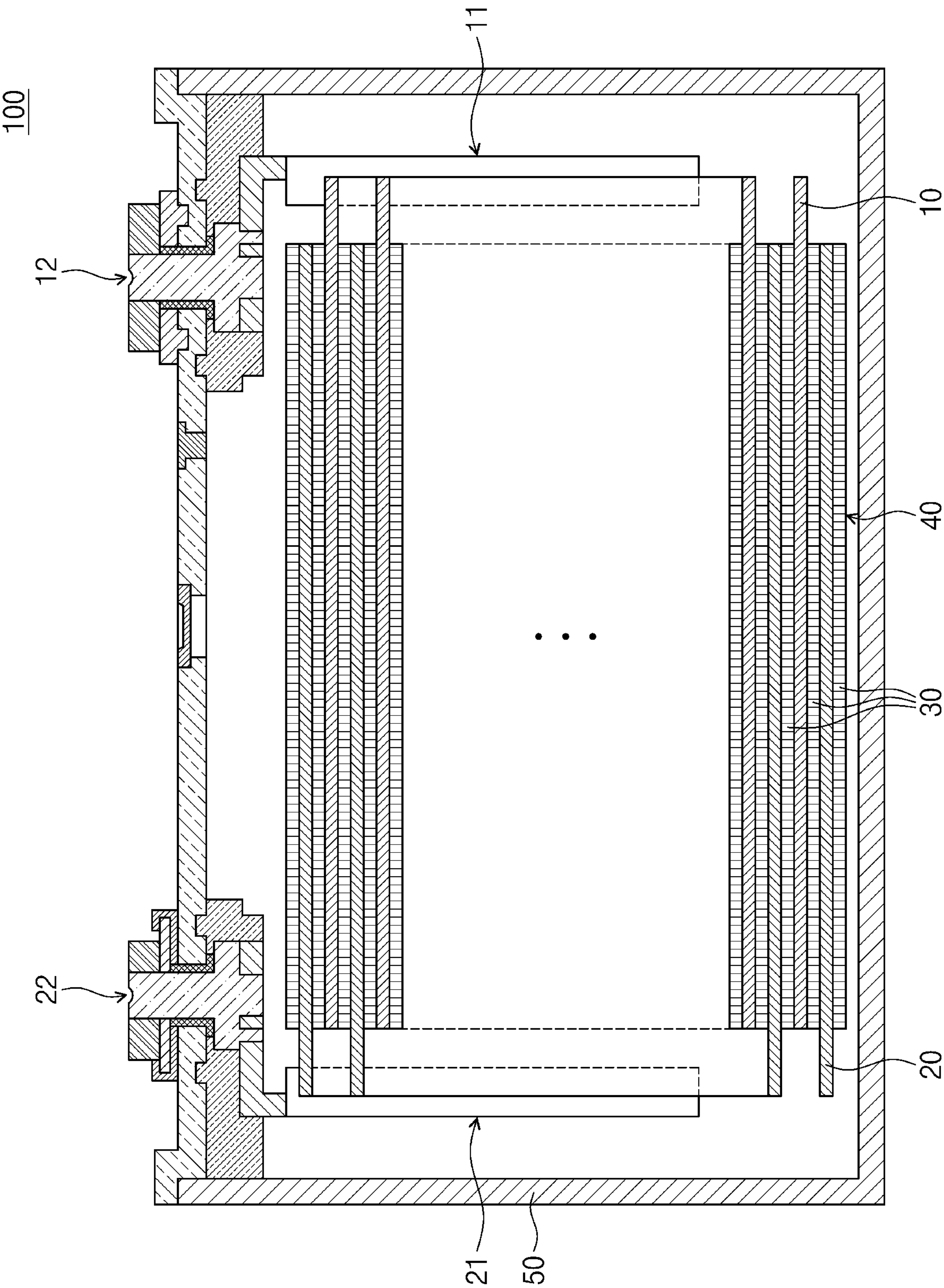

FIG. 4

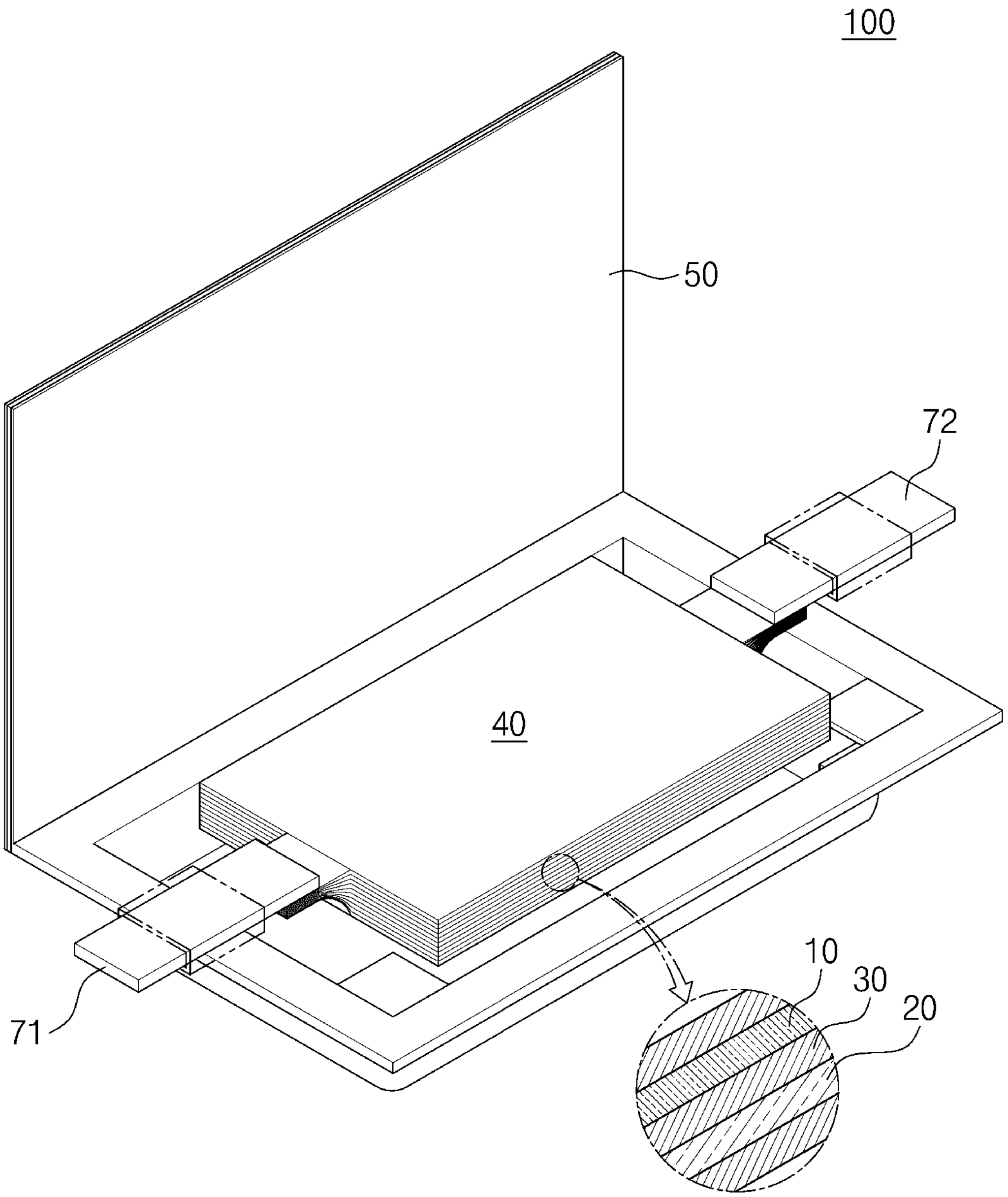

FIG. 5

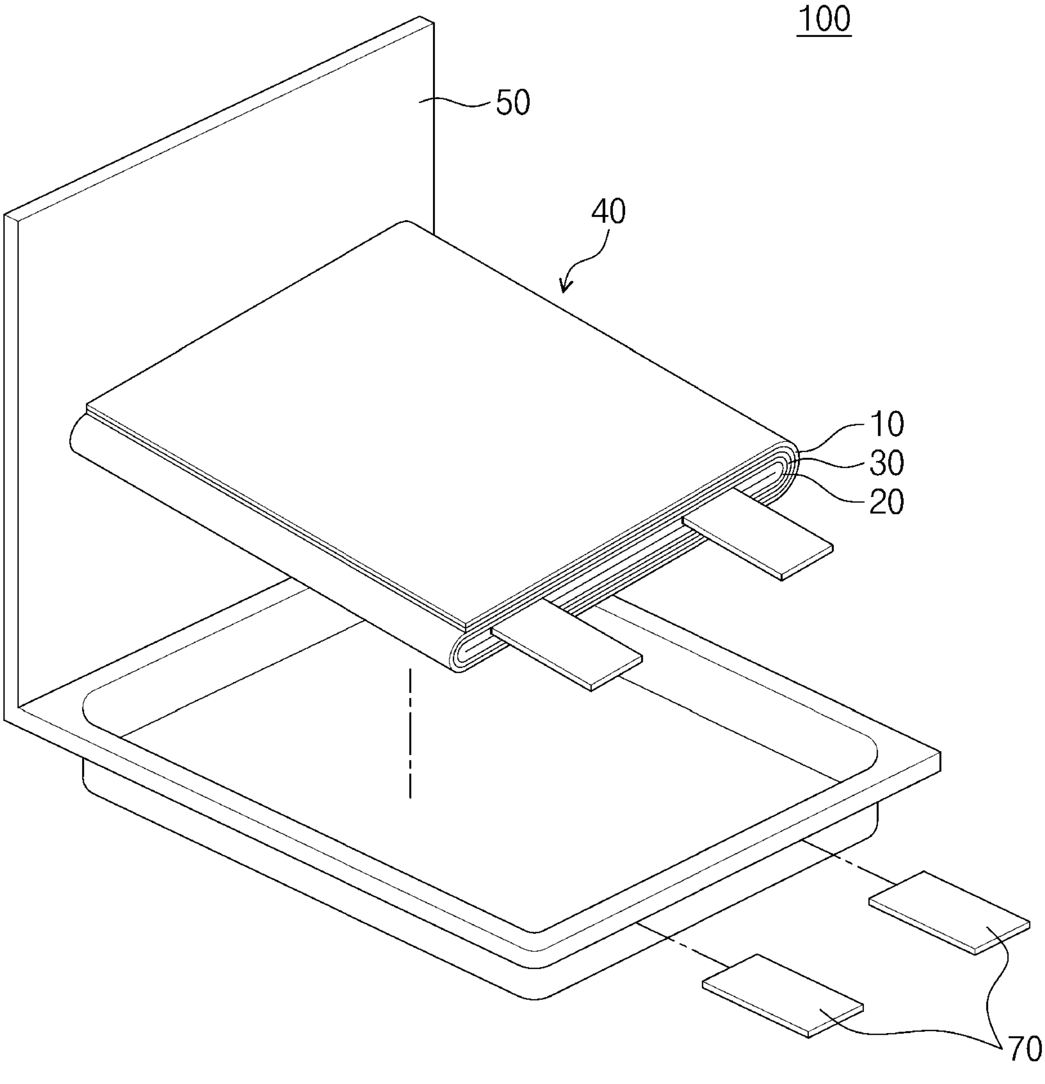

FIG. 6

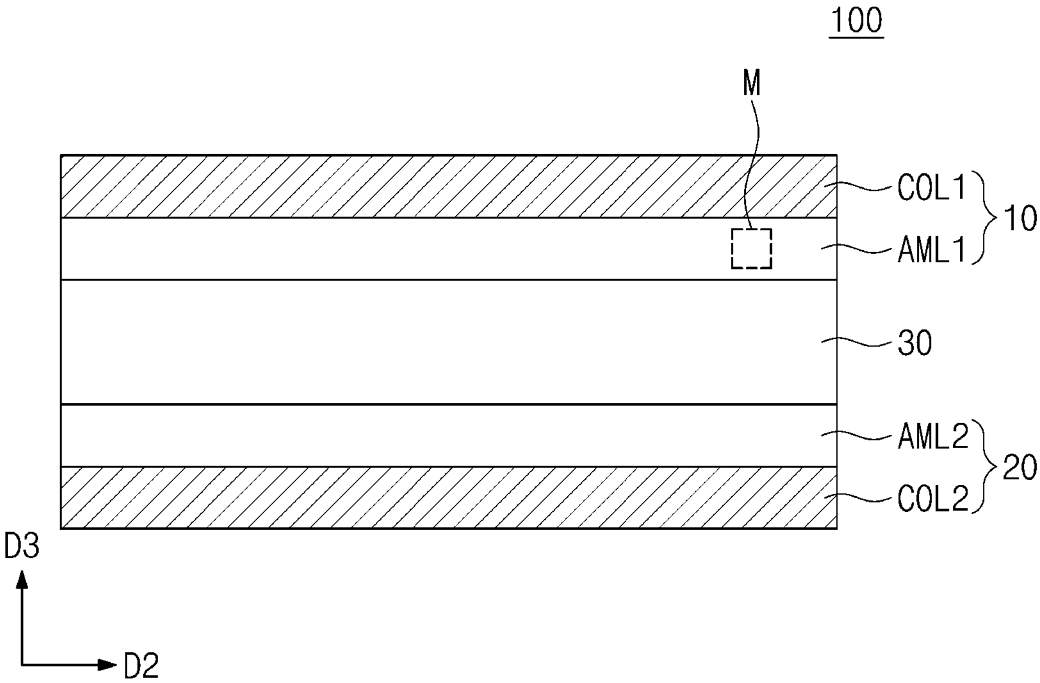


FIG. 7

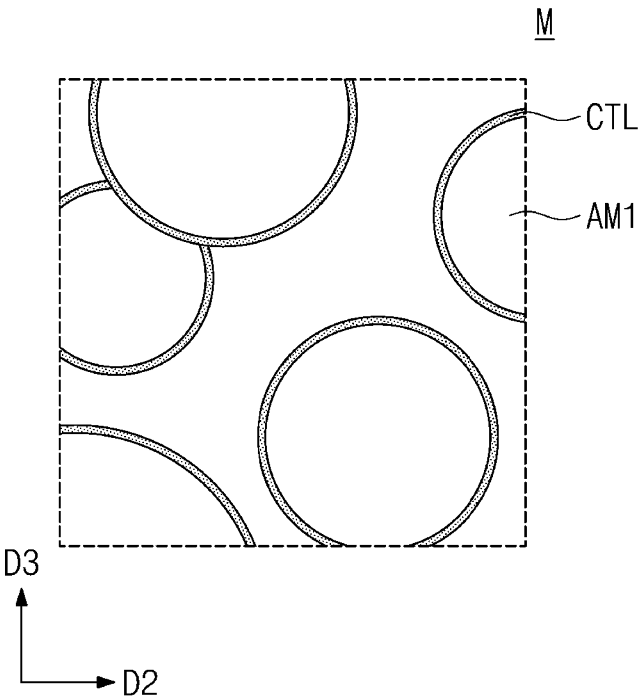

FIG. 8

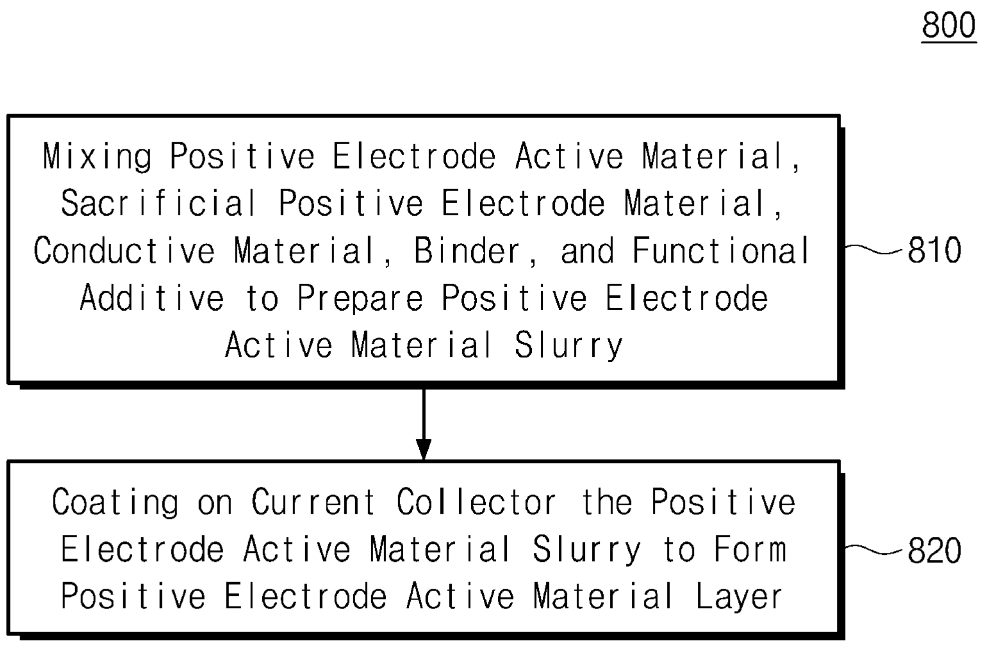
800
Mixing Positive Electrode Active Material, Sacrificial Positive Electrode Material, Conductive Material, Binder, and Functional Additive to Prepare Positive Electrode Active Material Slurry
810
Coating on Current Collector the Positive Electrode Active Material Slurry to Form Positive Electrode Active Material Layer
820

Europäisches Patentamt
European Patent Office
Office européen des brevets

# EUROPEAN SEARCH REPORT

Application Number
EP 25 19 3964

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2024/150450 A1 (NISSAN CHEMICAL CORP [JP]) 18 July 2024 (2024-07-18) * paragraphs [0123], [0145]; table 1 * ----- | 1-15 | INV. H01M4/62 H01M4/525 H01M10/0525 |
| Y | WO 2023/106834 A1 (LG ENERGY SOLUTION LTD [KR]) 15 June 2023 (2023-06-15) * paragraphs [0041], [0144] * ----- | 1-15 | |

TECHNICAL FIELDS SEARCHED (IPC)
H01M

The present search report has been drawn up for all claims

1

| Place of search | Date of completion of the search | Examiner |
|---|---|---|
| Munich | 9 December 2025 | Radeck, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 19 3964

This annex lists the patent family members relating to the patent documents cited in the above-mentioned European search report. The members are as contained in the European Patent Office EDP file on The European Patent Office is in no way liable for these particulars which are merely given for the purpose of information.

09-12-2025

| Patent document cited in search report | Publication date | Patent family member(s) | Publication date |
|---|---|---|---|
| WO 2024150450 A1 | 18-07-2024 | CN 120500749 A | 15-08-2025 |
| | | EP 4651228 A1 | 19-11-2025 |
| | | JP WO2024150812 A1 | 18-07-2024 |
| | | KR 20250135764 A | 15-09-2025 |
| | | WO 2024150446 A1 | 18-07-2024 |
| | | WO 2024150450 A1 | 18-07-2024 |
| | | WO 2024150479 A1 | 18-07-2024 |
| | | WO 2024150812 A1 | 18-07-2024 |
| WO 2023106834 A1 | 15-06-2023 | CN 117397054 A | 12-01-2024 |
| | | EP 4318641 A1 | 07-02-2024 |
| | | JP 2024516415 A | 15-04-2024 |
| | | KR 20230087402 A | 16-06-2023 |
| | | US 2024234833 A1 | 11-07-2024 |
| | | WO 2023106834 A1 | 15-06-2023 |

EPO FORM P0459

For more details about this annex : see Official Journal of the European Patent Office, No. 12/82